# EUROPEAN PATENT SPECIFICATION

(11) **EP 2 509 344 B1**
(45) Date of publication and mention of the grant of the patent: **13.01.2016**
(21) Application number: 10851627.9
(22) Date of filing: 03.09.2010
(51) Int. Cl.: H04W 4/12, H04L 29/06, H04L 12/58, H04W 28/06

(54) **METHOD FOR TRANSMITTING AND RECEIVING MULTIMEDIA INFORMATION AND TERMINAL THEREOF**
VERFAHREN ZUM SENDEN UND EMPFANGEN DIGITALER MULTIMEDIA-INFORMATIONEN UND ENTSPRECHENDES ENDGERÄT
PROCÉDÉ PERMETTANT DE TRANSMETTRE ET DE RECEVOIR DES INFORMATIONS MULTIMÉDIA ET TERMINAL ASSOCIÉ

(30) Priority: 20.05.2010 CN 201010184567
(43) Date of publication of application: 10.10.2012
(73) Proprietor: ZTE Corporation, Shenzhen, Guangdong 518057 (CN)
(72) Inventor: LIU, Cong, Shenzhen Guangdong 518057 (CN); ZHANG, Zhiping, Shenzhen Guangdong 518057 (CN); FU, Qihong, Shenzhen Guangdong 518057 (CN); PEI, Lihui, Shenzhen Guangdong 518057 (CN)
(74) Representative: Tischner, Oliver
(86) International application number: PCT/CN2010/076626
(87) International publication number: WO 2011/143870

(56) References cited:
- CN-A- 101 047 847
- CN-A- 101 047 916
- CN-A- 101 162 923
- CN-A- 101 212 506
- US-A- 5 541 919
- US-A1- 2007 198 731

## Description

The disclosure relates to the communication field, and in particular to a method for transmitting and receiving multimedia information and a terminal.

### BACKGROUND

At present, a short message is actually sent and received by sending a character string with a corresponding specified format by an Attention (AT) command. Such way for sending and receiving the short message further includes three modes: BLOCK mode, TEXT mode and Protocol Description Unit (PDU) mode. The BLOCK mode is rarely used; the TEXT mode can be only used for sending an American Standard Code for Information Interchange (ASCII) rather than a UNICODE of Chinese; although the TEXT code can be used for sending a Chinese short message in terms of technology, almost all domestic cell phones do not support such mode; therefore, the PDU mode is very common at present.

The development of the PDU mode needs writing a special function to convert a text into a PDU format; and since all cell phones support the PDU mode, any character set can be used for encoding. When the PDU mode is used for receiving and sending a short message, the following three encoding modes can be used: 7-bit code, 8-bit code and UCS2 code. Wherein, the 7-bit code is used for sending an ordinary ASCII character; the 8-bit code is generally used for sending a data message, such as picture, ringtone or the like; and the UCS2 code is used for sending a Unicode character. At present, up to 153 ASCII characters can be sent in a short message by the 7-bit code; up to 140 characters can be sent in a short message by the 8-bit code; and up to 70 Chinese characters can be sent in a short message by the UCS2 code. With the rapid development of a communication technology, an Enhanced Message Service (EMS) is attracting extensive attention. Compared with a Short Messaging Service (SMS), EMS can not only send text information but also send simple image, voice, animation and other information; in addition, EMS still can run on a Global System for Mobile Communications (GSM) network where an original SMS runs; and both a sending approach and operating way of EMS are the same as those of SMS, so that the development and application of EMS are more convenient.So, EMS adopts an open European Telecommunication Standards Institute (ETSI) standard, which belongs to scope of the 3rd Generation Partnership Project (3GPP). EMS realizes an application of a larger number of short messages through concatenation of multiple SMSs by utilizing an existing short-message system platform, and supports end-to-end message transmission, that is, cell phone users can send and receive combined information containing text, simple image, animation and voice by a short message; and EMS is also a carrier for content transmission, that is, such content as ringtone, screensaver, wallpaper, customized icon or the like can be downloaded to a cell phone.

EMS indicates different objects therein by adding various different Information Elements (IEs) in a User Data Header (UDH), so that a simple ringtone, a picture, even an animation and a text can be combined to be sent among cell phones which support EMS. Taking data including a 32Byte picture and a simple text sent by EMS as an example will be explained hereinafter.

The data sent by EMS is:
SMS User Data: Hello! <CR><LF><CR><LF>One small picture in here
SMS User Data Header: UDHL=0x24, IEI=0x11, 0xIEIDL=22, IED1=0x08, < 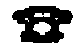 (small picture 32bytes)>
where, UDHL represents that the total number of bytes of the user data heade is 36Btye (including UDHL); IEI represents the type of an element inserted into EMS, for example, 0x11 represents a picture of 32Byte, 0x0B represents a predefined voice, and 0x0F represents a small animation (8*8 times 4 = 8*4 =32 bytes); IED1, i.e., the first bit of real data corresponding to IEs, represents a relative offset between the picture and the text data of the short message; and the following < 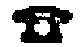 (small picture 32bytes)> is a binary encoding of a small picture.

However, such encoding has the problem that content input by a user can be automatically divided into multiple short messages according to the input order of a message sent by the user, for example, when the user inputs a text 1 (nine characters) + a picture (128Byte) + a text 2 (nine characters), both the text 1 and the text 2 cannot be sent together with the picture in the same short message even being very short, so the input content will be divided into three short messages; in this way, the text 1, the picture and the text 2 are respectively sent by three separate short messages, which will not only increase a cost of the user, but also produce multiple message exchanges (even requiring retransmission when necessary) in a network and between a network side and a user terminal due to transmission of each short message, such that a more network overhead is occupied and an additional burden is brought to the network.

There is still no effective solution for solving the problem of a high cost and a large network burden during transmission of a short message in a related technology.

Us 2007/198731 A1 discloses a method of processing a multimedia message is provided. The multimedia message comprises an original payload. The original payload is divided into at least two sub-messages. A sub-message header for each sub-message is then generated. The sub-message header may include an identification code of the multimedia message, a total number of the sub-messages, and a serial number of the sub-message. The method further appends the sub-message header to each sub-message. The sub-messages can be assembled to reconstruct back to the multimedia message according to the sub-message headers.

US 5,541,919 discloses a method and device in multimedia communication systems for segmenting information bitstreams from multiple media sources into variable length packets, and multiplexing and sending the packets to a shared communication link with low delay and low overhead. The packet segmentation and multiplexing are performed dynamically based on fullness of a set of information buffers that contain the information bitstreams to be transmitted, and delay-sensitivity of each information bitstreams. The multi-discipline queuing scheme has been developed in this invention to control the dynamic packet segmenting and multiplexing process.

### SUMMARY

In order to solve the problem of a high cost and a large network burden during transmission of a short message in a related technology, the disclosure discloses a method for transmitting and receiving multimedia information and a terminal, which can reduce a cost of the transmission of the short message and the network burden.

The technical solution of the disclosure is implemented as follows.

A method for transmitting multimedia information based on Enhanced Message Service (EMS) is provided according to one aspect of the disclosure.

The method for transmitting the multimedia information according to the disclosure includes: dividing multimedia information to be transmitted into multiple information segments; adding a position identification of each of the information segments in the multimedia information to be transmitted for each of the information segments; changing a flag which represents a relative position relative to a current information segment of Information Elements (IEs) in the EMS to an absolute address relative to the multimedia information; separating the multimedia information from the IEs by selective encoding and decoding the multimedia information and the IEs separately;
combining the multiple information segments to obtain multiple messages, wherein a length of each of the multiple messages is less than or equal to a predetermined length, and each of the messages contains at least one information segment; and sending some or all of the multiple messages to a receiver.

Wherein, the dividing the multimedia information to be transmitted into multiple information segments may include: dividing the multimedia information to be transmitted into the multiple information segments according to types of elements in the multimedia information to be transmitted, wherein multiple individual elements which are successively located and are of a same type in the multimedia information to be transmitted are divided into different information segments.

Furthermore, the combining the multiple information segments may include: combining at least two information segments into a message, when a sum of lengths of the at least two information segments is less than or equal to the predetermined length, wherein same or different types of elements are included in the message obtained through combination.

Furthermore, the sending the multiple messages to the receiver may include: determining a sending priority of the multiple messages according to a priority of the elements in the multiple messages, and sending all or some of the multiple messages according to the sending priority of the multiple messages.

In addition, the method may further include: after sending the multiple messages to the receiver, splicing, by the receiver, the information segments in the received messages according to the position identifications of the information segments in the received messages.

Wherein, the position identification of each of the information segments may include: an initial position of the information segment in the multimedia information to be transmitted, a length of the information segment, and an identification of the multimedia information to be transmitted.

A method for receiving multimedia information is further provided according to another aspect of the disclosure.

The method for receiving the multimedia information based on Enhanced Message Service (EMS) includes:
receiving, by a receiver, multiple messages from a sender; wherein the multiple messages are obtained by dividing the multimedia information to obtain multiple information segments; ; adding a position identification of each of the information segment in the multimedia information to be transmitted for each of the information segments; changing a flag which represents a relative position relative to a current information segment of Information Elements (IEs) in the EMS to an absolute address relative to the multimedia information; separating the multimedia information from the IEs by selective encoding and decoding the multimedia information and the IEs separately; and combining the obtained multiple information segments, a length of each of the multiple messages is less than or equal to a predetermined length; and
splicing, by the receiver, the information segments in the multiple messages according to the position identification of each of the information segments in the received multiple messages.

Wherein, a sum of lengths of at least two information segments is less than or equal to the predetermined length, and the same or different types of elements are included in the message obtained through combination.

A terminal, applied to transmitting multimedia information based on Enhanced Message Service (EMS), is further provided according to yet another aspect of the disclosure.

The terminal according to the disclosure includes: a segmenting module, configured to divide multimedia information to be transmitted into multiple information segments, to add a position identification of each of the information segment in the multimedia information to be transmitted for each of the information segments; to change a flag which represents a relative position relative to a current information segment of Information Elements (IEs) in the EMS to an absolute address relative to the multimedia information; to separate the multimedia information from the IEs by selective encoding and decoding the multimedia information and the IEs separately;
a combining module configured to combine the multiple information segments to obtain multiple messages, wherein the length of each of the multiple messages is less than or equal to a predetermined length and each of the messages contains at least one information segment; and a sending module, configured to send some or all of the multiple messages to a receiver side.

Wherein, the segmenting module may further be configured to divide the multimedia information to be transmitted into the multiple information segments according to types of elements in the multimedia information to be transmitted, wherein the segmenting module divides multiple individual elements which are successively located and are of a same type in the multimedia information to be transmitted into different information segments; and
the combining module may be configured to combine at least two information segments to obtain a message when a sum of lengths of the at least two information segments is less than or equal to the predetermined length, wherein same or different types of elements are included in the message obtained through combination.

Furthermore, the sending module may further be configured to determine a sending priority of the multiple messages according to a priority of the elements in the multiple messages, and send all or some of the multiple messages according to the sending priority of the multiple messages.

The system may further include: a splicing module, which is located in the receiver side, configured to splice the information segments in the received messages according to the position identifications of the information segments in the received messages.

Preferably, the position identification of each of the information segments may include: an initial position of the information segment in the multimedia information to be transmitted, a length of the information segment, and an identification of the multimedia information to be transmitted.

In the disclosure, a more complete message is obtained by dividing and combining the multimedia information to be transmitted; and compared with the related art, the multimedia information can be transmitted by lesser messages, so that a cost of a user is reduced and a network burden is alleviated.

### BRIEF DESCRIPTION OF THE DRAWINGS

Fig. 1 is a flowchart of a method for transmitting multimedia information according to one embodiment of the disclosure;
Fig. 2 is a schematic diagram of EMS of a text + a picture + a text input by a user;
Fig. 3 is a schematic diagram of a short message obtained by encoding content shown in Fig. 2 in a related technology;
Fig. 4 is a schematic diagram of a short message obtained by encoding the content shown in Fig. 2 by the method for transmitting the multimedia information according to one embodiment of the disclosure; and
Fig. 5 is a block diagram of a terminal according to one embodiment of the disclosure.

### DETAILED DESCRIPTION

In order to solve the problem of the high cost and the large network burden of the transmission of the short message in the related technology, the disclosure proposes that, multimedia information (wherein the multimedia information may include audio information, video information (including a dynamic image, a picture and the like), text information or combination thereof) to be transmitted is divided and combined to obtain a more complete message; and compared with the related art, the multimedia information can be transmitted by lesser messages, so that a cost of a user is reduced and a network burden is alleviated.

Embodiments of the disclosure will be described in detail with reference to drawings hereinafter.

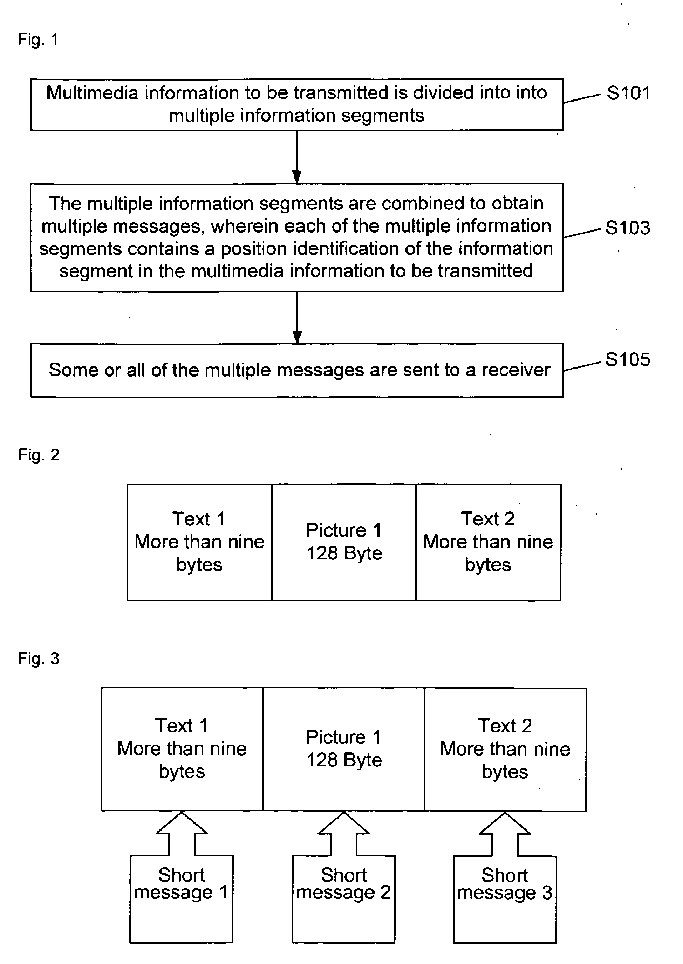

Fig. 1 is a processing flowchart showing a method for transmitting multimedia information according to one embodiment of the disclosure, which includes:
S101: multimedia information to be transmitted is divided into multiple information segments.
S103: the multiple information segments are combined to obtain multiple messages, wherein each of the multiple information segments includes a position identification (which is used for splicing the information segment to obtain complete multimedia information when a receiver receives the message) of the information segment in the multimedia information to be transmitted; in addition, a length of each of the multiple messages is less than or equal to a predetermined length which can be a maximum length of each short message predetermined by an operator or the like, and each of the messages includes at least one information segment; wherein, during the combination, the length of each of the messages can be preferably made to be approximate to or equal to the predetermined length as much as possible, to ensure that each of the messages is the most complete, and if a length of a information segment has been equal to the predetermined length, the information segment can be directly taken as a message.
S105: some or all of the multiple messages are sent to a receiver.

By the abovementioned processing, a more complete message is obtained by dividing and combining the multimedia information to be transmitted, and compared with the related art, the multimedia information can be transmitted by lesser messages, so that a cost of a user is reduced and a network burden is alleviated.

The multimedia information to be transmitted can be divided into the multiple information segments by various dividing methods, for example, the multimedia information to be transmitted can be divided into the multiple information segments according to types of elements in the multimedia information to be transmitted, wherein multiple individual elements which are located successively and are of the same type in the multimedia information to be transmitted can be divided into different information segments; specifically, it is assumed that a user successively inputs a text 1, a picture 1, an image 1, an image 2 and a text 2; at the moment, the types of the elements include text, picture and image, so that the text 1, the picture 1, the image 1, the image 2 and the text 2 can be taken as an information segment respectively.

Here, during the combination of the multiple information segments, when a sum of lengths of at least two information segments is less than or equal to the predetermined length, the at least two information segments are combined to obtain a message, wherein same or different types of elements are included in the message obtained through combination, for example, on the premise that the length of each of the messages is less than or equal to the predetermined length, if the sum of the lengths of the text 1, the text 2 and the picture 1 is less than the predetermined length, and both the lengths of the image 1 and the image2 are very approximate to the predetermined length, then the text 1, the text 2 and the picture 1 can be combined into a message, the image 1 and the image 2 are respectively taken as a message, and the content of the multimedia information is transmitted through three messages; in addition, if the sum of the lengths of the text 1 and the image 1 is less than the predetermined length, the sum of the lengths of the text 2 and the image 2 is less than the predetermined length, and the length of the picture 1 is less than the predetermined length, then the text 1 and the image 1, the text 2 and the image 2, and the picture 1 can be respectively taken as a message, and the contents of the multimedia information can also be transmitted through three messages; that is, a selective encoding process is implemented, and other dividing and combining ways are not described here any more.

Thereafter, during the transmission, a sending priority of multiple messages can be determined according to a priority of elements in the messages, and some or all of the messages are sent according to the sending priority of the messages.

For example, it is assumed that the text has the highest priority, the picture has a lower priority than that of the text, and the image has the lowest priority, therefore, a message only containing a text information segment has the highest priority, a message only containing an image has the lowest priority, and the determination method of the sending priority can be predetermined for a message containing at least two element types among the text, picture and image, thereby needing no detailed description here.

When being sent, a message can be sent successively according to the order of the sending priority (for example, the message is sent in a descending order according to the sending priority), or the message can further be sent randomly; under the circumstance of a poor network quality or a busy network, only some messages whose sending priority are higher than a certain level are sent, for example, only a message containing the text is sent, so that transmission flexibility of the multimedia information is effectively improved.

In addition, besides the abovementioned division ways, the division can be performed according to bytes of the multimedia information to be transmitted, i.e., multiple bytes of the multimedia information can be once divided into multiple information segments according to the order of the bytes of the multimedia information to be transmitted; if a total length of bytes in each segment is less than or equal to the predetermined length, each segment can be directly taken as a message to be transmitted.

After multiple messages are sent to a receiver, the receiver can splice the multiple information segments to obtain multimedia information according to position identifications of information segments in the multiple messages. If all the messages of the multimedia information fail to be received and other messages which belong to the multimedia information still fail to be successively received within a certain time, the receiver can splice the received messages. Therefore, under the condition that a network is poor and a sender only sends the messages having a higher sending priority to the receiver, the receiver can still know a general content of the message.

In order to ensure that the receiver can successfully splice the information segments to obtain the original multimedia information, the position identification of each of the information segments can include: an initial position of the information segment in the multimedia information to be transmitted, a length of the information segment, and an identification of the multimedia information to be transmitted; preferably, it can further include the total number of messages obtained through dividing and combining the multimedia information.

In a practical application process, after the division is performed, a position identification of each segment can be added to the segment; preferably, based on an existing EMS, the flag (IED1) of the IEs in the EMS, which represents a relative position relative to a currently divided short message, is changed to an absolute address relative to the whole multimedia information input by a user, so as to separate the whole text of the user from the IEs, that is, a long EMS text and IEs are encoded and decoded separately, so as to solve the problem that some short messages are not complete and waste the space, which is caused by the division in the successive encoding and decoding of the text and the IEs in the related technology.

Taking performing a division according to the type of an element as an example, the method for transmitting multimedia information will be described in detail thereinafter.

As shown in Fig. 2, it is assumed that a user successively inputs a text 1 + picture 1 + text 2, and adopts the 8-bit encoding way (the text 1, the picture 1 and the text 2 may not occupy the whole length of the message, i.e., a sum of lengths of the picture 1 and the text 2 may be less than a predetermined length).

As shown in Fig. 3, if a successive encoding-decoding way in a related technology is adopted, an input of a user will be divided into the following three short messages. Due to the successive encoding-decoding, i.e., the division and combination performed according to the input of the user, such as in the way of the text + picture + text + audio, the short messages will be wasted; for example, after the user successively inputs more than nine characters, a picture of 128Byte, and nine characters, such input will be divided into three short messages by the successive division method: since the text 1 + the picture 1 cannot be put in the same short message, the text 1 and the picture 1 can only be put in the short message 1 and the short message 2 respectively; however, since the picture 1 + the text 2 still cannot be both put in the short message 2, the picture 1 + the text 2 are further divided into two short messages; therefore, when the user sends a short message similar to the text 1 + the picture 1 + the text 2, the short message will be divided into three short messages to be sent.

At the moment, a corresponding header of the IEs occurs before a header of the second short message, as follows:
SMS User Data Header: IEI=0x10, IEIDL=0x82, IED1=0x00;
where, IEI represents a big picture of 32*32 (128byte) inserted by the user; IEIDL represent the total length of the data of the IEs; and IED1, the first bit of data, represents that a relative position of the picture is zero in the second short message.

A terminal at another end, after receiving the corresponding multiple short messages, finds the IEs when parsing the second short message, at the moment, the user finds that the relative position of the picture is zero when finding the first bit of the IED of the user during parsing, that is, after parsing the information of the first short message, the user will add the picture thereafter to complete the decoding process of multiple EMSs and obtain complete multimedia information.

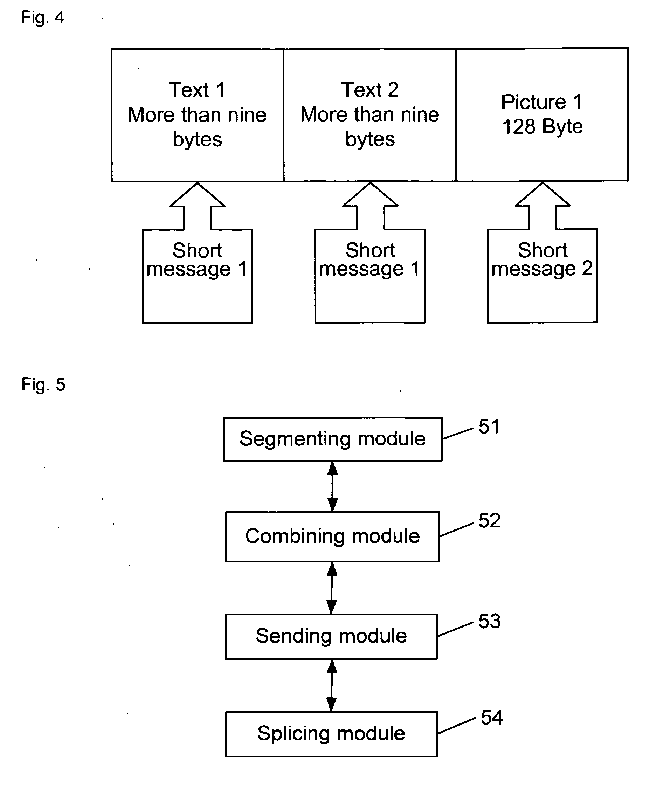

As shown in Fig. 4, the input of the user will be divided into two short messages if the selective encoding way is adopted in the subject application. Specifically, when the TPDU is encoded and decoded by the selective sequencing method, for the text 1 (having more than nine characters) + the picture 1 + the text 2 (having more than nine characters), the text 1 is first searched, then the user finds that the picture of 128Byte is followed by the text 1, at the moment, the picture is skipped to continue the searching, and, after searching the picture 1, the text 1 + the text 2 are filled in the first short message at first, if there is other text, the other text may further be put in the short message 1 together; and then the picture of 128Byte is sent separately as a short message, such that the waste that nine characters are sent only in the first short message is avoided; therefore, such long EMS short message, such as the text 1 (having more than nine characters) + the picture 1 + the text 2 (having more than nine characters), is sent by utilizing the selective sequencing method, the long EMS short message can be sent through 2 short messages to save a short message. Wherein the corresponding header of the IEs occurs before the header of the second short message, specifically as follows:
SMS User Data Header: IEI=0x10, IEIDL=0x82, IED1=0x12;
where, IEI represents a big picture of 32*32 (128byte) inserted by the user; IEIDL represents the total length of the data of the IEs; and IED1, the first bit of data, represents that an absolute position of the picture is eighteen in the whole short message.

When the multiple short messages from the user are received, data of the user is decoded and combined. When multiple TPDU character strings sent in the selective sequencing are parsed, the user can preferentially extract the identifications of the IEs, such as picture and audio, from the identifications of the received multiple short messages first, because the first bit of IED has a specific absolute position of an element in a long short message, and the user extracts such information first and then inserts information of these elements when the text is decoded.

By means of the above processing, a more complete message is obtained by dividing and combining the multimedia information to be transmitted; and compared with the related art, the multimedia information can be transmitted by lesser messages, so that a cost of a user is reduced and a network burden are alleviated; in addition, sending of information is optimized in combination with a priority of elements, so that a short message is sent more flexibly and a scenario of a poor network quality is effectively adapted.

Fig. 5 is a block diagram of a terminal according to one embodiment of the disclosure, and as shown in Fig. 5, the terminal includes:
a segmenting module 51, configured to divide multimedia information to be transmitted into multiple information segments;
a combining module 52, configured to combine the multiple information segments to obtain multiple messages, wherein each of the multiple information segments contains a position identification of the information segment in the multimedia information to be transmitted, and a length of each of the multiple messages is less than or equal to a predetermined length, and each of the messages includes at least one information segment; and
a sending module 53, configured to send some or all of the multiple messages to a receiver side.

By means of the above system, a more complete message can be obtained through dividing and combining the multimedia information to be transmitted; and compared with the related art, multimedia information can be transmitted by lesser messages, so that a cost of a user is reduced and a network burden is alleviated.

Specifically, the segmenting module 51 can be configured to divide the multimedia information to be transmitted into the multiple information segments according to types of elements in the multimedia information to be transmitted, wherein the segmenting module divides multiple individual elements which are located successively and are of a same type in the multimedia information to be transmitted into different information segments; and
the combining module 52 may be configured to combine at least two information segments to obtain a message when a sum of lengths of the at least two information segments is less than or equal to the predetermined length, wherein same or different types of elements are included in the message obtained through combination. Furthermore, the sending module 53 may be further configured to determine a sending priority of the multiple messages according to a priority of the elements in the multiple messages, and send all or some of the multiple messages according to the sending priority of the multiple messages, so that successive sending or selective sending of the messages is realized to ensure that a receiver can receive the messages having a high priority. In addition, the segmenting module 51 can be further configured to divide the multimedia information by taking the byte as a unit, and the combining module 52 can directly take one segment as a message.

The specific dividing way has been described in the abovementioned method embodiments, thereby needing no further repeating herein.

The system may further include: a splicing module 54, which is located in the receiver side, configured to splice the multiple information segments to obtain multimedia information according to the position identification of each of the information segments in the multiple messages.

Wherein, the position identification of each of the information segments includes: an initial position of the information segment in the multimedia information to be transmitted, a length of the information segment, and an identification of the multimedia information to be transmitted, and preferably, the position identification of each of the information segments can further include a total number of messages obtained through dividing and combining the multimedia information.

The system according to the embodiment of the disclosure can further execute the processing described in the abovementioned method embodiments, and the process of the execution has been described previously, thereby needing no further repeating herein.

To sum up, by means of the technical solution of the disclosure, a more complete message is obtained through dividing and combining the multimedia information to be transmitted; and compared with the related art, multimedia information can be transmitted by lesser messages, so that a cost of a user is reduced and a network burden is alleviated; in addition, sending of information is optimized by combining a priority of elements, so that a short message is sent more flexibly and a scenario of a poor network quality is effectively adapted.

## Claims

1. A method for transmitting multimedia information based on Enhanced Message Service EMS, comprising:
dividing multimedia information to be transmitted into multiple information segments (S101);
adding a position identification of each of the information segments in the multimedia information to be transmitted for each of the information segments;
changing a flag which represents a relative position relative to a current information segment of Information Elements IEs in the EMS to an absolute address relative to the multimedia information;
separating the multimedia information from the IEs by selective encoding and decoding the multimedia information and the IEs separately;
combining the multiple information segments to obtain multiple messages (S103), wherein a length of each of the multiple messages is less than or equal to a predetermined length, and each of the messages contains at least one information segment; and
sending some or all of the multiple messages to a receiver (S105).

2. The method for transmitting the multimedia information according to claim 1, wherein the dividing the multimedia information to be transmitted into the multiple information segments comprises:
dividing the multimedia information to be transmitted into the multiple information segments according to types of elements in the multimedia information to be transmitted,
wherein multiple individual elements which are successively located and are of a same type in the multimedia information to be transmitted are divided into different information segments.

3. The method for transmitting the multimedia information according to claim 2, wherein the combining the multiple information segments comprises:
combining at least two information segments to obtain a message, when a sum of lengths of the at least two information segments is less than or equal to the predetermined length,
wherein same or different types of elements are included in the message obtained through combination.

4. The method for transmitting the multimedia information according to claim 2, wherein the sending the multiple messages to the receiver comprises:
determining a sending priority of the multiple messages according to a priority of the elements in the multiple messages, and sending all or some of the multiple messages according to the sending priority of the multiple messages.

5. The method for transmitting the multimedia information according to claim 1, further comprising:
after sending the multiple messages to the receiver,
splicing, by the receiver, information segments in the received messages according to the position identifications of the information segments in the received messages.

6. The method for transmitting the multimedia information according to any one of claims 1 to 5, wherein the position identification of each of the information segments comprises: an initial position of the information segment in the multimedia information to be transmitted, a length of the information segment, and an identification of the multimedia information to be transmitted.

7. A method for receiving multimedia information based on Enhanced Message Service EMS, comprising:
receiving, by a receiver, multiple messages from a sender;
wherein the multiple messages are obtained by dividing the multimedia information to obtain multiple information segments; adding a position identification of each of the information segment in the multimedia information to be transmitted for each of the information segments; changing a flag which represents a relative position relative to a current information segment of Information Elements IEs in the EMS to an absolute address relative to the multimedia information; separating the multimedia information from the IEs by selective encoding and decoding the multimedia information and the IEs separately; and combining the obtained multiple information segments, a length of each of the multiple messages is less than or equal to a predetermined length,; and
splicing, by the receiver, information segments in the multiple messages according to the position identification of each of the information segments in the received multiple messages.

8. The method for receiving the multimedia information according to claim 7, wherein at least two information segments are combined to obtain a message when a sum of lengths of the at least two information segments is less than or equal to the predetermined length, wherein the same or different types of elements are included in the message obtained through combination.

9. A terminal, applied to transmitting multimedia information based on Enhanced Message Service EMS, comprising:
a segmenting module (51), configured to divide multimedia information to be transmitted into multiple information segments; to add a position identification of each of the information segment in the multimedia information to be transmitted for each of the information segments; to change a flag which represents a relative position relative to a current information segment of Information Elements IEs in the EMS to an absolute address relative to the multimedia information; to separate the multimedia information from the IEs by selective encoding and decoding the multimedia information and the IEs separately;
a combining module (52), configured to combine the multiple information segments to obtain multiple messages, wherein a length of each of the multiple messages is less than or equal to a predetermined length, and each of the messages contains at least one information segment; and
a sending module (53), configured to send some or all of the multiple messages to a receiver side.

10. The terminal according to claim 9, wherein the segmenting module (51) is further configured to divide the multimedia information to be transmitted into the multiple information segments according to types of elements in the multimedia information to be transmitted;
wherein the segmenting module divides multiple individual elements which are successively located and are of a same type in the multimedia information to be transmitted into different information segments.

11. The terminal according to claim 10, wherein the combining module (52) is further configured to combine at least two information segments to obtain a message when a sum of lengths of the at least two information segments is less than or equal to the predetermined length;
wherein same or different types of elements are included in the message obtained through combination.

12. The terminal according to claim 10, wherein the sending module (53) is further configured to determine a sending priority of the multiple messages according to a priority of the elements in the messages, and send all or some of the multiple messages according to the sending priority of the multiple messages.

13. The terminal according to claim 9, wherein the terminal further comprises:
a splicing module (54), which is located in the receiver side, configured to splice information segments in the received messages according to the position identifications of the information segments in the received messages.

14. The terminal according to any one of claims 9 to 13, wherein the position identification of each of the information segments comprises: an initial position of the information segment in the multimedia information to be transmitted, a length of the information segment, and an identification of the multimedia information to be transmitted.

## Patentansprüche

1. Verfahren zum Übertragen von Multimedia-Informationen basierend auf einem erweiterten Nachrichtendienst, EMS, umfassend folgende Schritte:
Unterteilen von zu übertragenden Multimedia-Informationen in mehrere Informationssegmente (S101);
Hinzufügen einer Positionskennung jedes der Informationssegmente in den zu übertragenden Multimedia-Informationen für jedes der Informationssegmente;
Ändern eines Flags, das eine relative Position mit Bezug auf ein aktuelles Informationssegment aus Informationselementen, IEs, in dem EMS darstellt, auf eine absolute Adresse mit Bezug auf die Multimedia-Informationen;
Trennen der Multimedia-Informationen von den IEs durch selektive Codierung und getrenntes Decodieren der Multimedia-Informationen und der IEs;
Kombinieren der mehreren Informationssegmente, um mehrere Nachrichten (S103) zu erzielen, wobei eine Länge jeder der mehreren Nachrichten kleiner oder gleich einer vorbestimmten Länge ist, und jede der Nachrichten mindestens ein Informationssegment enthält; und
Senden einiger oder aller der mehreren Nachrichten an einen Empfänger (S105).

2. Verfahren zum Übertragen von Multimedia-Informationen nach Anspruch 1, wobei die Unterteilung der zu übertragenden Multimedia-Informationen in mehrere Informationssegmente Folgendes umfasst:
Unterteilen der zu übertragenden Multimedia-Informationen in mehrere Informationssegmente gemäß Elementtypen in den zu übertragenden Multimedia-Informationen,
wobei mehrere einzelne Elemente, die sich in den zu übertragenden Multimedia-Informationen nacheinander befinden und vom gleichen Typ sind, in unterschiedliche Informationssegmente unterteilt werden.

3. Verfahren zum Übertragen von Multimedia-Informationen nach Anspruch 2, wobei das Kombinieren der mehreren Informationssegmente Folgendes umfasst:
Kombinieren von mindestens zwei Informationssegmenten, um eine Nachricht zu erzielen, wenn eine Summe von Längen der mindestens zwei Informationssegmente kleiner oder gleich der vorbestimmten Länge ist,
wobei gleiche oder unterschiedliche Elementtypen in der durch Kombination erzielten Nachricht enthalten sind.

4. Verfahren zum Übertragen von Multimedia-Informationen nach Anspruch 2, wobei das Senden der mehreren Nachrichten an den Empfänger Folgendes umfasst:
Bestimmen einer Sendepriorität der mehreren Nachrichten multiples gemäß einer Priorität der Elemente in den mehreren Nachrichten und Senden aller oder einiger der mehreren Nachrichten gemäß der Sendepriorität der mehreren Nachrichten.

5. Verfahren zum Übertragen von Multimedia-Informationen nach Anspruch 1, ferner umfassend:
nach dem Senden der mehreren Nachrichten an den Empfänger,
Zusammenfügen durch den Empfänger von Informationssegmenten in den empfangenen Nachrichten gemäß den Positionskennungen der Informationssegmente in den empfangenen Nachrichten.

6. Verfahren zum Übertragen von Multimedia-Informationen nach einem der Ansprüche 1 bis 5, wobei die Positionskennung jedes der Informationssegmente Folgendes umfasst: eine Anfangsposition des Informationssegments in den zu übertragenden Multimedia-Informationen, eine Länge des Informationssegments und eine Kennung der zu übertragenden Multimedia-Informationen.

7. Verfahren zum Empfangen von Multimedia-Informationen basierend auf einem erweiterten Nachrichtendienst, EMS, umfassend folgende Schritte:
Empfangen durch einen Empfänger von mehreren Nachrichten von einem Sender;
wobei die mehreren Nachrichten erzielt werden durch Unterteilen der Multimedia-Informationen, um mehrere Informationssegmente zu erzielen; Hinzufügen einer Positionskennung jedes der Informationssegmente in den zu übertragenden Multimedia-Informationen für jedes der Informationssegmente; Ändern eines Flags, das eine relative Position mit Bezug auf ein aktuelles Informationssegment aus Informationselementen, IEs, in dem EMS darstellt, auf eine absolute Adresse mit Bezug auf die Multimedia-Informationen; Trennen der Multimedia-Informationen von den IEs durch selektive Codierung und getrenntes Decodieren der Multimedia-Informationen und der IEs; und Kombinieren der erzielten mehreren Informationssegmente, wobei eine Länge jeder der mehreren Nachrichten kleiner oder gleich einer vorbestimmten Länge ist; und
Zusammenfügen durch den Empfänger von Informationssegmenten in den mehreren Nachrichten gemäß der Positionskennung jedes der Informationssegmente in den empfangenen mehreren Nachrichten.

8. Verfahren zum Empfangen der Multimedia-Informationen nach Anspruch 7, wobei mindestens zwei Informationssegmente kombiniert werden, um eine Nachricht zu erzielen, wenn eine Summe von Längen der mindestens zwei Informationssegmente kleiner oder gleich der vorbestimmten Länge ist, wobei gleiche oder unterschiedliche Elementtypen in der durch Kombination erzielten Nachricht enthalten sind.

9. Endgerät, angewendet auf die Übertragung von Multimedia-Informationen basierend auf einem erweiterten Nachrichtendienst, EMS, umfassend:
ein Segmentierungsmodul (51), das konfiguriert ist zum Unterteilen zu übertragender Multimedia-Informationen in mehrere Informationssegmente; Hinzufügen einer Positionskennung jedes der Informationssegmente in den zu übertragenden Multimedia-Informationen für jedes der Informationssegmente; Ändern eines Flags, das eine relative Position mit Bezug auf ein aktuelles Informationssegment der Informationselemente, IEs, in dem EMS darstellt, auf eine absolute Adresse mit Bezug auf die Multimedia-Informationen; Trennen der Multimedia-Informationen von den IEs durch eine selektive Codierung und getrenntes Decodieren der Multimedia-Informationen und der IEs;
ein Kombinationsmodul (52), das konfiguriert ist zum Kombinieren der mehreren Informationssegmente, um mehrere Nachrichten zu erzielen, wobei eine Länge jeder der mehreren Nachrichten kleiner oder gleich einer vorbestimmten Länge ist, und jede der Nachrichten mindestens ein Informationssegment enthält; und
ein Sendemodul (53), das konfiguriert zum Senden einiger oder aller der mehreren Nachrichten an eine Empfängerseite.

10. Endgerät nach Anspruch 9, wobei das Segmentierungsmodul (51) ferner konfiguriert ist zum Unterteilen der zu übertragenden Multimedia-Informationen in mehrere Informationssegmente gemäß den Elementtypen in den zu übertragenden Multimedia-Informationen;
wobei das Segmentierungsmodul mehrere einzelne Segmente, die sich in den zu übertragenden Multimedia-Informationen nacheinander befinden und vom gleichen Typ sind, in unterschiedliche Informationssegmente unterteilt.

11. Endgerät nach Anspruch 10, wobei das Kombinationsmodul (52) ferner konfiguriert ist zum Kombinieren von mindestens zwei Informationssegmenten, um eine Nachricht zu erzielen, wenn eine Summe von Längen der mindestens zwei Informationssegmente kleiner oder gleich der vorbestimmten Länge ist;
wobei gleiche oder unterschiedliche Elementtypen in der durch Kombination erzielten Nachricht enthalten sind.

12. Endgerät nach Anspruch 10, wobei das Sendemodul (53) ferner konfiguriert ist zum Bestimmen einer Sendepriorität der mehreren Nachrichten gemäß einer Priorität der Elemente in den Nachrichten, und zum Senden aller oder einiger der mehreren Nachrichten gemäß der Sendepriorität der mehreren Nachrichten.

13. Endgerät nach Anspruch 9, wobei das Endgerät ferner Folgendes umfasst:
ein Zusammenfügungsmodul (54), das sich auf der Empfängerseite befindet und konfiguriert ist, um Informationssegmente in den empfangenen Nachrichten gemäß den Positionskennungen der Informationssegmente in den empfangenen Nachrichten zusammenzufügen.

14. Endgerät nach einem der Ansprüche 9 bis 13, wobei die Positionskennung jedes der Informationssegmente Folgendes umfasst: eine Anfangsposition des Informationssegments in den zu übertragenden Multimedia-Informationen, eine Länge der Informationssegmente und eine Kennung der zu übertragenden Multimedia-Informationen.

## Revendications

1. Procédé de transmission d'informations multimédia sur la base d'un service de messagerie étendue, EMS, comprenant les étapes consistant à :
diviser des informations multimédia à transmettre en segments d'informations multiples (S101) ;
ajouter une identification de position de chacun des segments d'informations dans les informations multimédia à transmettre pour chacun des segments d'informations ;
changer un drapeau qui représente une position relative par rapport à un segment d'informations en cours d'éléments d'informations, IEs, dans l'EMS en une adresse absolue par rapport aux informations multimédia ;
séparer les informations multimédia des IEs par un codage sélectif et un décoder séparément les informations multimédia et les IEs ;
combiner les segments d'informations multiples pour obtenir des messages multiples (S103), dans lequel une longueur de chacun des messages multiples est inférieure ou égale à une longueur prédéterminée, et chacun des messages contient au moins un segment d'informations ; et
envoyer certains ou tous les messages multiples à un récepteur (S105).

2. Procédé de transmission d'informations multimédia selon la revendication 1, dans lequel la division des informations multimédia à transmettre en segments d'informations multiples comprend l'étape consistant à :
diviser les informations multimédias à transmettre en segments d'informations multiples selon des types d'éléments dans les informations multimédia à transmettre,
dans lequel des éléments individuels multiples qui sont situés successivement et sont d'un même type dans les informations multimédia à transmettre sont divisés en segments d'informations différents.

3. Procédé de transmission d'informations multimédia selon la revendication 2, dans lequel la combinaison des segments d'informations multiples comprend l'étape consistant à :
combiner au moins deux segments d'informations pour obtenir un message quand une somme des longueurs desdites au moins deux segments d'informations est inférieure ou égale à la longueur prédéterminée,
dans lequel des types d'éléments identiques ou différents sont inclus dans le message obtenu par combinaison.

4. Procédé de transmission d'informations multimédia selon la revendication 2, dans lequel l'envoi des messages multiples au récepteur comprend l'étape consistant à :
déterminer une priorité d'envoi des messages multiples selon une priorité des éléments dans les messages multiples, et envoyer tous ou certains des messages multiples selon la priorité d'envoi des messages multiples.

5. Procédé de transmission d'informations multimédia selon la revendication 1, comprenant en outre :
après l'envoi des messages multiples au récepteur,
joindre, par le récepteur, des segments d'informations dans les messages reçus selon les identifications de position des segments d'informations dans les messages reçus.

6. Procédé de transmission d'informations multimédia selon l'une quelconque des revendications 1 à 5, dans lequel l'identification de position de chacun des segments d'informations comprend : une position initiale du segment d'informations dans les informations multimédia à transmettre, une longueur du segment d'informations et une identification des informations multimédia à transmettre.

7. Procédé de réception d'informations multimédia sur la base d'un service de messagerie étendue, EMS, comprenant les étapes consistant à :
recevoir, par un récepteur, des messages multiples d'un émetteur ;
dans lequel les messages multiples sont obtenus en divisant les informations multimédia pour obtenir des segments d'informations multiples ; ajouter une identification de position de chacun des segments d'informations dans les informations multimédia à transmettre pour chacun des segments d'informations ; changer un drapeau qui représente une position relative par rapport à un segment d'informations en cours d'éléments d'informations, IEs, dans l'EMS en une adresse absolue par rapport aux informations multimédia ; séparer les informations multimédia des IEs par codage sélectif et décoder séparément les informations multimédia et les IEs ; et combiner les segments d'informations multiples obtenus, une longueur de chacun des messages multiples étant inférieure ou égale à une longueur prédéterminée ; et
joindre, par le récepteur, des segments d'informations dans les messages multiples selon l'identification de position de chacun des segments d'informations dans les messages multiples reçus.

8. Procédé de réception d'informations multimédia selon la revendication 7, dans lequel au moins deux segments d'informations sont combinés pour obtenir un message quand une somme de longueurs desdits au moins deux segments d'informations est inférieure ou égale à la longueur prédéterminée, dans lequel les types d'éléments identiques ou différents sont inclus dans le message obtenu par combinaison.

9. Terminal, appliqué à la transmission d'informations multimédia sur la base d'un service de messagerie étendue, EMS, comprenant :
un module de segmentation (51), configuré pour diviser des informations multimédia à transmettre en segments d'informations multiples ; ajouter une identification de position de chacun des segments d'informations dans les informations multimédia à transmettre pour chacun des segments d'informations ; changer un drapeau qui représente une position relative par rapport à un segment d'informations en cours d'éléments d'informations, IEs, dans l'EMS en une adresse absolue par rapport aux informations multimédia ; séparer les informations multimédia des IEs par un codage sélectif et décoder séparément les informations multimédia et les IEs ;
un module de combinaison (52), configuré pour combiner les segments d'informations multiples pour obtenir des messages multiples, dans lequel une longueur de chacun des messages multiples est inférieure ou égale à une longueur prédéterminée, et chacun des messages contient au moins un segment d'informations ; et
un module d'envoi (53), configuré pour envoyer certains ou tous les messages multiples à un côté récepteur.

10. Terminal selon la revendication 9, dans lequel le module de segmentation (51) est en outre configuré pour diviser les informations multimédia à transmettre en segments d'informations multiples selon des types d'éléments dans les informations multimédia à transmettre ;
dans lequel le module de segmentation divise des segments individuels multiples qui sont situés successivement et sont du même type dans les informations multimédia à transmettre en segments d'informations différents.

11. Terminal selon la revendication 10, dans lequel le module de combinaison (52) est en outre configuré pour combiner au moins deux segments d'informations pour obtenir un message lorsqu'une somme de longueurs desdits au moins deux segments d'informations est inférieure ou égale à la longueur prédéterminée ;
dans lequel des types d'éléments identiques ou différents sont inclus dans le message obtenu par combinaison.

12. Terminal selon la revendication 10, dans lequel le module d'envoi (53) est en outre configuré pour déterminer une priorité d'envoi des messages multiples selon une priorité des éléments dans les messages, et pour envoyer tous ou certains des messages multiples selon la priorité d'envoi des messages multiples.

13. Terminal selon la revendication 9, dans lequel le terminal comprend en outre :
un module de jonction (54) qui se trouve du côté récepteur, configuré pour joindre des segments d'informations dans les messages reçus selon les identifications de position des segments d'informations dans les messages reçus.

14. Terminal selon l'une quelconque des revendications 9 à 13, dans lequel l'identification de position de chacun des segments d'information comprend : une position initiale du segment d'informations dans les informations multimédia à transmettre, une longueur du segment d'informations, et une identification des informations multimédia à transmettre.
